# EUROPÄISCHE PATENTSCHRIFT

(11) **EP 1 421 842 B1**
(45) Veröffentlichungstag und Bekanntmachung des Hinweises auf die Patenterteilung: **19.07.2006**
(21) Anmeldenummer: 03026304.0
(22) Anmeldetag: 15.11.2003
(51) Int. Cl.: A01D 43/08

(54) **Erntegerät**
harvester
recolteuse

(30) Priorität: 20.11.2002 DE 10254082
(43) Veröffentlichungstag der Anmeldung: 26.05.2004
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 1 247 440
- DE-A- 2 828 766
- DE-A- 3 623 380
- DE-A- 19 951 459
- US-A- 5 040 362

## Beschreibung

Die Erfindung bezieht sich auf ein Erntegerät zum Ernten von Mais oder dergleichen stengelartigem Erntegut in einer Ausbildung nach dem Oberbegriff des Anspruches 1. Ein derartiges als Vorsatzgerät für einen Feldhäcksler vorgesehenes Erntegerät dient zum Aufnehmen, Abschneiden und dem Überführen von beispielsweise Maispflanzen an eine Weiterverarbeitungsvorrichtung.

Aus der DE 101 16 675 A1 ist ein Erntegerät der eingangs genannten Art bekannt, bei der in der Schneidebene als hakenförmige Messer ausgebildete Förder- und Führungselemente des Endlosförderers vorgesehen sind, die mit einem Schneidmesser zusammenwirken, welches unmittelbar unter dem Endlosförderer fest an ein Rahmenteil angebracht ist, wobei es einteilig oder mehrteilig aus Messersegmenten ausgeführt sein kann. Die den Schneid- und Haltemitteln zugewandte Vorderseite des Endlosförderers ist dabei im wesentlichen geschlossen ausgebildet, wobei zur Unterstützung des Endlosförderers bei der Zuführung des stengelartigen Erntegutes an eine Weiterverarbeitungsvorrichtung Blatt- und Pflanzenheber vorgesehen sind, welche im wesentlichen aus einer pyramidenförmigen Teilerspitze und einem Führungsbügel bestehen. Dieses Erntegerät arbeitet zwar durchaus zufriedenstellend, jedoch werden unter bestimmten Betriebszuständen Ansammlungen von Erntegut und Erntegutresten im Bereich der Blatt- und Pflanzenheber verursacht. Des weiteren kann es an den hakenförmigen Förder- und Führungselementen des Endlosförderers zum Hängenbleiben von Blättern oder dgl. langfaserigen Pflanzenteilen kommen.

Der Erfindung liegt daher die Aufgabe zugrunde, ein Erntegerät der eingangs genannten Art dahingehend weiter zu optimieren, dass möglichst unter allen Betriebszuständen Verunreinigungen und Ansammlungen von Erntegut und Erntegutresten vermieden werden.

Zur Lösung dieser Aufgabe zeichnet sich das Erntegerät der eingangs genannten Art durch die im kennzeichnenden Teil des Anspruchs 1 angegebenen Merkmale aus. Hinsichtlich weiterer vorteilhafter Merkmale wird auf die Ansprüche 2 bis 14 verwiesen.

Wesentlicher Vorteil des Erntegerätes nach der vorliegenden Erfindung ist, dass die dem Erntegerät jeweils im Bereich eines Blatt- und Pflanzenhebers hinzugefügten rotierenden Schneid- und Räumscheiben gleichzeitig mehrere Funktionen erfüllen. Sie vermeiden wirksam Ablagerungen von Erntegut und Erntegutresten im Bereich von Blatt- und Pflanzenhebem bzw. an Teilen der Blatt- und Pflanzenheber. Sie übernehmen im Bereich der Blatt- und Pflanzenheber das Abschneiden der Erntegutpflanze und ermöglichen durch das Weglassen des Messers die Schaffung eines freien Bereiches in der Schneidebene, wobei diese Unterbrechung der Schneidebene in Verbindung mit der rotierenden Schneid- und Räumscheibe eine Reinigungswirkung auf die Förder- und Führungselemente des Endlosförderers hat. Des weiteren werden wesentlich verbesserte Reinigungseigenschaften im Bereich der Schneidebene dadurch erzielt, dass untere Enden von Erntegutresten, die zwischen den Förder- und Führungselementen und dem Schneidmesser eingeklemmt sind, beim Überfahren der Unterbrechung der Schneidebene freigegeben werden und entweder abgeschnitten werden oder durch den, von den rotierenden Schneid- und Räumscheiben erzeugten Luftstrom entfernt werden. Zur Verstärkung der Reinigungswirkung durch, von den Schneid- und Räumscheiben erzeugte Luftströmungen, können die Schneid- und Räumscheiben unter anderem mit zusätzlichen angeschraubten Räumern bzw. Luftschaufeln versehen sein. Die bevorzugtermassen als Sägeblatt ausgebildeten Schneid- und Räumscheiben verstärken diesen Effekt durch eine Schränkung der Zähne.

Teile von Blatt- und Pflanzenhebern, insbesondere deren Halter, sind zweckmäßigerweise derart ausgebildet, dass die Bereiche der bevorzugten Ablagerung von Erntegutresten von der Reinigungswirkung der Schneid- und Räumscheiben vollständig abgedeckt werden.
Die im begrenzten Maße bereits vorhandene Reinigungswirkung der Förder- und Führungselemente durch die stufenförmige Ausbildung der Schneidsegmente des Schneidmessers wird in den Bereichen der Schneid- und Räumscheiben durch das Fehlenlassen des Schneidsegmentes erheblich verbessert. Da in diesem Bereich eventuell nur ein schmales Füllstück das Schneidsegment ersetzt, ergibt sich an dieser Stelle eine wesentlich größere Stufe und Öffnung in der Schneidebene mit der bereits beschriebenen Reinigungswirkung.

Weitere Einzelheiten und Vorteile der Erfindung gehen aus der folgenden, detaillierten Beschreibung eines möglichen Ausführungsbeispieles hervor. In der Zeichnung stellen im einzelnen dar:
- Fig. 1: eine perspektivische Ansicht eines Ausführungsbeispieles eines erfindungsgemäßen Erntegerätes mit zwei Einzugs- und Fördereinrichtungen, die spiegelbildlich zueinander ausgebildet sind;
- Fig.2: eine vergrößerte, teilweise abgebrochene Explosionsdarstellung der Einzelheit X in Fig. 1;

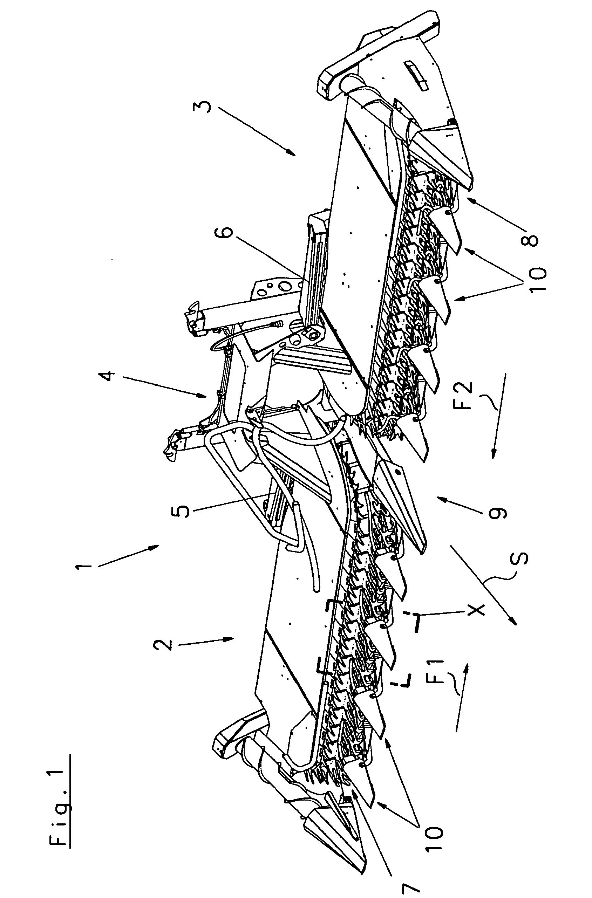

Das in Fig. 1 dargestellte Ausführungsbeispiel eines nach den Erfindungsmerkmalen gestalteten Erntegerätes 1 kann als Vorsatzgerät für eine mobile Verarbeitungseinrichtung in der Art eines Häckslers zum reihenunabhängigen Ernten von stengelartigem Erntegut wie Mais oder dergleichen eingesetzt werden. Das Erntegerät 1 besteht aus zumindest einer, vorzugsweise jedoch aus zwei in der längsten Ausrichtung quer zur Fahrt- und Arbeitsrichtung S ausgerichteten, zueinander spiegelbildlich ausgeführten Schneid- und Fördereinrichtungen 2,3, die so nebeneinander angeordnet sind, dass ein durchgehender Erntegutstreifen mit gro-βer Arbeitsbreite abgeerntet werden kann. Zur Aufhängung des Erntegerätes 1 an einer Verarbeitungsvorrichtung ist ein Tragrahmen 4 vorgesehen, der schwenkbar angelenkte Tragarme 5,6 umfasst. Mit Hilfe dieser Tragarme 5,6 können die Schneid- und Fördereinrichtungen 2,3 aus der in Fig. 1 dargestellten Arbeits- und Betriebsstellung in eine Transportstellung überführt werden, in der sie eine etwa vertikal ausgerichtete, hochgeklappte Stellung mit einer geringen Transportbreite einnehmen.

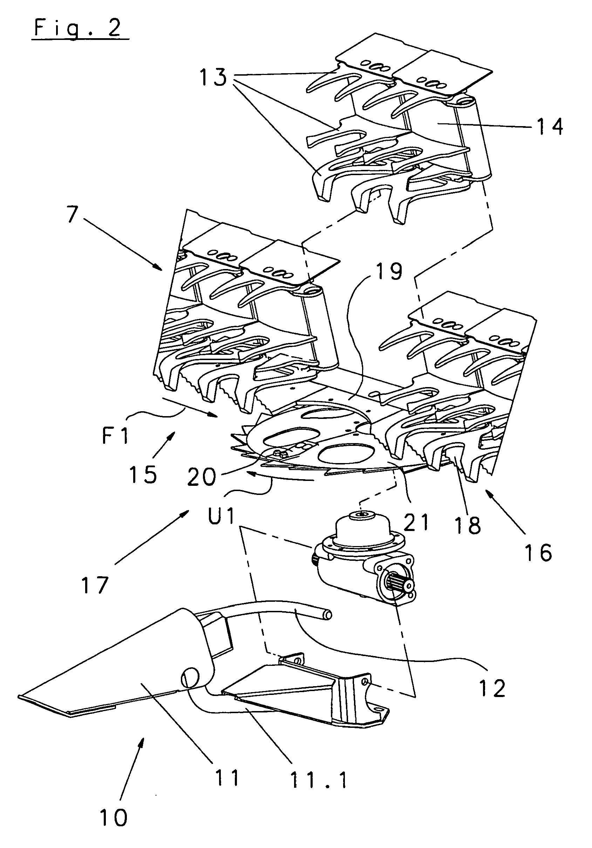

Das Erntegerät 1 hat in dem gezeigten Ausführungsbeispiel für jede Schneid- und Fördereinrichtung 2,3 jeweils einen umlaufenden Endlosförderer 7,8, welcher nahe einem Zuführungsbereich 9 des jeweiligen Endlosförderers 7,8 von der Weiterverarbeitungseinrichtung, etwa einem Häcksler, antreibbar ist. Die Förderrichtung F1,F2 der Endlosförderer 7,8 verläuft in etwa quer zur Fahrt- und Arbeitsrichtung S und ist zur Mitte des Erntegerätes 1 hin gerichtet. Wie weiterhin den Fig. 1 und 2 zu entnehmen ist, weist jede Schneid- und Fördereinrichtung 2,3 zum einen zur Erleichterung der Ernte von liegendem oder teilweise liegendem stengelartigem Erntegut und zum anderen als Unterstützung der Endlosförderer 7,8 bei der Zuführung des stengelartigen Erntegutes an die Verarbeitungseinrichtung Blatt- und Pflanzenheber 10 auf, welche im wesentlichen aus einer etwa pyramidenförmigen Teilerspitze 11, den Haltern 11.1 und einem Führungsbügel 12 bestehen.

Wie insbesondere auch aus Fig. 2 näher hervorgeht, bestehen die Endlosförderer 7,8 im wesentlichen aus einer Vielzahl aneinandergereihter mit Förder- und Führungselementen 13 bestückten Förder- und Führungsgliedern 14, welche ein flexibles Fördersystem darstellen, das entlang unterschiedlicher Bewegungsbahnen geführt sein kann. Im dargestellten Ausführungsbeispiel werden die Förder- und Führungsglieder 14 der Endlosförderer 7,8 im Arbeitstrum entlang einer geradlinig ausgeführten Bewegungsbahn geführt. Zudem sind Schneidmesser 16 vorgesehen, die unterhalb dieser Bewegungsbahn eine Schneidebene 15 bilden und aus Verschleißgründen leicht auswechselbar sein sollten.

Weiterhin ist in der Fig. 2 deutlich die als Schneid- und Räummittel 17 ausgeführte erfindungsgemäße Reinigungseinrichtung zu erkennen. Das mit hoher Drehzahl angetriebene Schneid- und Räummittel 17 ist direkt unterhalb der als Messersegmente 18 ausgebildeten Schneidmesser 16, jeweils im Bereich eines Blatt- und Pflanzenhebers 10, in Form einer Schneid- und Räumscheibe 21 angeordnet. Durch die Umfangsverzahnung der Schneid- und Räumscheibe 21 in der Art eines Sägeblattes, verbunden mit einer hohen Antriebsdrehzahl, schneidet die Schneid- und Räumscheibe 21 in ihrem Erfassungsbereich die Pflanzenstiele im freien Schnitt ab, bevor sie von den Förder- und Führungselementen 13 des Endlosförderers 7,8 erfasst werden. Die der Förderrichtung F1,F2 des Endlosförderers 7,8 gegenläufige Drehrichtung U1,U2 der Schneid- und Räummittel 17 unterstützt dabei die Zuführung der abgetrennten Pflanzenstiele zum Endlosförderer 7,8. Durch diese Übernahme der Schneidfunktion im Erfassungsbereich der Schneid- und Räummittel 17, wird die Unterbrechung der Schneidebene 15 beispielsweise durch das Weglassen eines Messersegmentes 18 ermöglicht.

In Fig. 2 ist durch die Explosionsdarstellung deutlich das zur Erhaltung einer geschlossenen Führungsebene für den Endlosförderer 7,8, montierte Füllstück 19 zu erkennen, welches statt eines Messersegmentes 18 montiert, einen großen Freiraum in der Schneidebene 15 entstehen lässt. Als Hauptvorteil der erfindungsgemäßen Reinigungseinrichtung ist es anzusehen, dass sowohl Blatt- und Pflanzenheberteile, insbesondere deren Halterung 11.1 als auch die Förder- und Führungselemente 13 des Endlosförderers 7,8 von Erntegut und Erntegutresten frei gehalten werden, wobei die im Ausführungsbeispiel gewählte Form der Schneid- und Räummittel 17 mit zusätzlichen montierten Räumern 20 zur Durchführung der Reinigungswirkung besonders gut geeignet sind.

Weitere vorteilhafte Ausführungsformen der erfindungsgemäßen Reinigungseinrichtung sind denkbar. So könnte z. B. das Schneid- und Räummittel 17 durch ein Sichelmesser mit direkt angeformten oder montierten Räumern bzw. Luftschaufeln ersetzt werden. Auch währen die im Ausführungsbeispiel gezeichneten stufenförmigen Messersegmente 18 als durchgängige Schneidmesser zwischen den Füllstücken 19 denkbar.

## Patentansprüche

1. Erntegerät (1) zum Ernten von Mais oder dergleichen stengelartigem Erntegut, wobei das Erntegerät (1) zumindest einen umlaufenden Endlosförderer (7,8) für aufgenommenes Erntegut umfasst, der einen Zuführungsbereich (9) des Erntegutes zu einer Eintrittsöffnung einer Weiterverarbeitungseinrichtung, insbesondere eines Häckslers, ausbildet, und der Endlosförderer (7,8) Förder- und Führungselemente (13) aufweist, die im Zusammenwirken mit mindestens einem, unmittelbar unterhalb der umlaufenden Förder- und Führungselemente (13) des Endlosförderers (7,8) feststehend angeordnetem Schneidmesser (16) eine Schneidebene (15) bilden, wobei dem Endlosförderer (7,8) zumindest ein Blatt- und Pflanzenheber (10) zur Unterstützung der Zuführung des stengelartigen Erntegutes zugeordnet ist, **dadurch gekennzeichnet, dass** die Anordnung bzw. Ausbildung des/der Schneidmesser (16) so gewählt ist, dass jeweils im Bereich eines Blatt- und Pflanzenhebers (10) ein, von zumindest einem Abschnitt eines Schneidmessers (16) freibleibender Raum entsteht und das in diesem Bereich ein bewegliches Schneid- und Räummittel (17) vorgesehen ist.

2. Erntegerät nach Anspruch 1, **dadurch gekennzeichnet, dass** das bewegliche Schneid- und Räummittel (17) als rotierbare Schneid- und Räumscheibe (21) ausgebildet ist.

3. Erntegerät nach Anspruch 1 und 2, **dadurch gekennzeichnet, dass** das bewegliche Schneid- und Räummittel (17) als rotierbare Schneid- und Räumscheibe (21) ausgebildet und in einer unmittelbar unterhalb des Endlosförderers (7,8) und parallel zu dessen Bewegungsbahn befindlichen Ebene angeordnet ist.

4. Erntegerät nach Anspruch 1, **dadurch gekennzeichnet, dass** das bewegliche Schneid- und Räummittel (17) als rotierbares Sichelmesser ausgeführt ist.

5. Erntegerät nach Anspruch 4, **dadurch gekennzeichnet, dass** das bewegliche Schneid- und Räummittel (17) als rotierbares Sichelmesser ausgeführt ist, welches in einer unmittelbar unterhalb des Endlosförderers (7,8) und parallel zu dessen Bewegungsbahn angeordneten Ebene rotiert.

6. Erntegerät nach einem der Ansprüche 1 bis 3, **dadurch gekennzeichnet, dass** das rotierbare Schneid- und Räummittel (17) am Umfang eine Zahnform in der Art eines Sägeblattes aufweist.

7. Erntegerät nach Anspruch 6, **dadurch gekennzeichnet, dass** das rotierbare Schneid- und Räummittel (17) am Umfang eine Zahnform in der Art eines Sägeblattes aufweist, wobei mindestens ein Zahn geschränkt ist.

8. Erntegerät nach einem der Ansprüche 1 bis 7, **dadurch gekennzeichnet, dass** die Schneid- und Räummittel (17) weitere Mittel zur Verstärkung der Räum- und Reinigungsfunktion aufweisen.

9. Erntegerät nach einem der Ansprüche 1 bis 8, **dadurch gekennzeichnet, dass** die Schneid- und Räummittel (17) mit jeweils mindestens einem Räumer (20) zur Verstärkung der Räum- und Reinigungsfunktion versehen sind.

10. Erntegerät nach einem der Ansprüche 1 bis 9, **dadurch gekennzeichnet, dass** die Drehrichtung (U1,U2) der Schneid- und Räummittel (17) gegenläufig zur Förderrichtung (F1,F2) des Endlosförderers (7,8) ist.

11. Erntegerät nach einem der Ansprüche 1 bis 10, **dadurch gekennzeichnet, dass** das rotierbare Schneid- und Räummittel (17) das Erntegut im freien Schnitt abtrennt.

12. Erntegerät nach einem der Ansprüche 1 bis 11, **dadurch gekennzeichnet, dass** das Schneidmesser (16) unterhalb des Endlosförderers aus aneinandergereihten Messersegmenten (18) besteht.

13. Erntegerät nach einem der Ansprüche 1 bis 12, **dadurch gekennzeichnet, dass** im Bereich eines Blatt- und Pflanzenhebers (10) ein Füllstück (19) montiert ist.

14. Erntegerät nach einem der Ansprüche 1 bis 13, **dadurch gekennzeichnet, dass** die Schneide der Schneidebene (15) unterhalb des Endlosförderers (7,8) auch stufenförmig mit Absätzen ausgebildet sein kann.

## Claims

1. Harvester (1) for harvesting maize or similar stalked-type crops for harvesting, the harvester (1) comprising at least one circulating continuous feeder (7, 8) for harvested crops which are picked up, which continuous feeder (7, 8) creates a region (9) for the infeed of the harvested crop to an inlet opening of a means for further processing, in particular a chopper, and the continuous feeder (7, 8) has feeding and guiding members (13) which, in co-operation with at least one cutting blade (16) which is arranged in a fixed position immediately below the circulating feeding and guiding members (13) of the continuous conveyor (7, 8), form a cutting plane (15), the continuous conveyor (7, 8) having associated with it at least one leaf and plant lifter (10) to assist the infeed of the stalked-type harvested crop, **characterised in that** the arrangement or form of the cutting blade/blades (16) is so selected that, in the region of a leaf and plant lifter in each case, a space is produced which is left free of at least one section of a cutting blade (16), and **in that** a movable cutting and clearing means (17) is provided in this region.

2. Harvester according to claim 1, **characterised in that** the movable cutting and clearing means (17) is in the form of a rotatable cutting and clearing disc (21).

3. Harvester according to claim 1 or 2, **characterised in that** the movable cutting and clearing means (17) is in the form of a rotatable cutting and clearing disc (21) and is arranged in a plane situated immediately below the continuous feeder (7, 8) and parallel to the path of movement thereof.

4. Harvester according to claim 1, **characterised in that** the movable cutting and clearing means (17) is produced as a rotatable sickle blade.

5. Harvester according to claim 4, **characterised in that** the movable cutting and clearing means (17) is produced as a rotatable sickle blade which rotates in a plane arranged immediately below the continuous feeder (7, 8) and parallel to the path of movement thereof.

6. Harvester according to one of claims 1 to 3, **characterised in that** the rotatable cutting and clearing means (17) has, at the circumference, a tooth shape of a sawblade-like kind.

7. Harvester according to claim 6, **characterised in that that** the rotatable cutting and clearing means (17) has, at the circumference, a tooth shape of a sawblade-like kind, with at least one tooth having a side set.

8. Harvester according to one of claims 1 to 7, **characterised in that that** the cutting and clearing means (17) have further means for boosting the clearing and cleaning action.

9. Harvester according to one of claims 1 to 8, **characterised in that that** the cutting and clearing means (17) are each provided with at least one clearer (20) for boosting the clearing and cleaning action.

10. Harvester according to one of claims 1 to 9, **characterised in that** the direction of rotation (U1, U2) of the cutting and clearing means (17) is opposite from the direction of feed (F1, F2) of the continuous feeder (7, 8).

11. Harvester according to one of claims 1 to 10, **characterised in that that** the rotatable cutting and clearing means (17) severs the harvested crop by a free cut.

12. Harvester according to one of claims 1 to 11, **characterised in that** the cutting blade (16) below the continuous conveyor comprises blade segments (18) which are lined up one against the other.

13. Harvester according to one of claims 1 to 12, **characterised in that** a filler piece (19) is mounted in the region of a leaf and plant lifter (10).

14. Harvester according to one of claims 1 to 13, **characterised in that** the cutting edge on the cutting plane (15) below the continuous feeder (7, 8) may also be formed in a staircase shape having steps.

## Revendications

1. Appareil de récolte (1) pour récolter du maïs ou autres produits de culture à tiges, cet appareil (1) comportant au moins un convoyeur sans fin (7, 8) pour recevoir le produit, ce convoyeur comportant une zone d'alimentation (9) du produit vers un orifice d'entrée d'une installation de traitement en aval, notamment une ensileuse, et le convoyeur sans fin (7, 8) comporte des éléments de convoyage et de guidage (13) qui coopèrent avec au moins un couteau de coupe (16) fixe situé directement sous les éléments de transfert et de guidage (13) en mouvement du convoyeur sans fin (7, 8) pour former un plan de coupe (15),
le convoyeur sans fin (7, 8) comportant un dispositif de relevage de feuilles et de plantes (10) pour faciliter l'introduction du produit en tiges,
**caractérisé en ce que**
la disposition ou la réalisation du ou des couteaux (16) est choisie pour que chaque fois au niveau d'un dispositif de relevage de feuilles ou de plantes (10) il se forme un espace au moins dégagé d'un segment du couteau (16) et dans cette zone on a un moyen de coupe et de dégagement mobile (17).

2. Appareil selon la revendication 1,
**caractérisé en ce que**
le moyen de coupe et de dégagement (17), mobile, est un disque de coupe et de dégagement (21) rotatif.

3. Appareil selon les revendications 1 et 2,
**caractérisé en ce que**
le moyen de coupe et de dégagement mobile (17) est un disque de coupe et de dégagement (21) rotatif installé dans un plan situé directement en dessous du convoyeur sans fin (7, 8) et parallèlement au chemin de déplacement de celui-ci.

4. Appareil selon la revendication 1,
**caractérisé en ce que**
le moyen de coupe et de dégagement mobile (17) est réalisé sous la forme d'un couteau rotatif en forme de faucille.

5. Appareil selon la revendication 4,
**caractérisé en ce que**
le moyen de coupe et de dégagement mobile (17) est un couteau rotatif en forme de faucille tournant dans un plan directement en dessous du convoyeur sans fin (7, 8) et parallèlement à son plan de déplacement.

6. Appareil selon l'une des revendications 1 à 3,
**caractérisé en ce que**
le moyen de coupe et de dégagement rotatif (17) comporte à sa périphérie une forme de dent constituant une lame de scie.

7. Appareil selon la revendication 6,
**caractérisé en ce que**
le moyen de coupe et de dégagement rotatif (17) présente à sa périphérie une forme de dent à la manière d'une lame de scie et au moins une dent est en biais.

8. Appareil selon l'une des revendications 1 à 7,
**caractérisé en ce que**
les moyens de coupe et de dégagement (17) comportent d'autres moyens pour renforcer la fonction de dégagement et de nettoyage.

9. Appareil selon l'une des revendications 1 à 8,
**caractérisé en ce que**
les moyens de coupe et de dégagement (17) comportent chaque fois au moins un organe de dégagement (20) pour renforcer la fonction de dégagement et de nettoyage.

10. Appareil selon l'une des revendications 1 à 9,
**caractérisé en ce que**
le sens de rotation (U1, U2) des moyens de coupe et de dégagement (17) est opposé à la direction de circulation (F1, F2) du convoyeur sans fin (7, 8).

11. Appareil selon l'une des revendications 1 à 10,
**caractérisé en ce que**
le moyen de coupe et de dégagement rotatif (17) coupe le produit par une coupe libre.

12. Appareil selon l'une des revendications 1 à 11,
**caractérisé en ce que**
le couteau (16) sous le convoyeur sans fin se compose de segments de couteau (18) placés les uns derrière les autres.

13. Appareil selon les revendications 1 à 12,
**caractérisé par**
une pièce de remplissage (19) installée dans la zone d'un dispositif de soulèvement de feuilles et de plantes (10).

14. Appareil selon les revendications 1 à 13,
**caractérisé en ce que**
l'arête du plan de coupe (15) sous le convoyeur sans fin (7, 8) peut également être étagée avec des décrochements.
